# FASCICULE DE BREVET EUROPEEN

(11) **EP 3 191 785 B1**
(45) Date de publication et mention de la délivrance du brevet: **29.03.2023**
(21) Numéro de dépôt: 15760450.5
(22) Date de dépôt: 08.09.2015
(51) Int. Cl.: F28F 3/04, F28D 1/03, F28D 20/02, F28D 20/00, F28D 21/00

(54) **TUBE À RÉSERVOIR DE MATÉRIAU À CHANGEMENT DE PHASE POUR ÉCHANGEUR DE CHALEUR**
ROHR MIT RESERVOIR FÜR EIN PHASENWECHSELMATERIAL FÜR EINEN WÄRMETAUSCHER
TUBE WITH A RESERVOIR OF PHASE-CHANGE MATERIAL FOR A HEAT EXCHANGER

(30) Priorité: 08.09.2014 FR 1458387
(43) Date de publication de la demande: 19.07.2017
(73) Titulaire: Valeo Systemes Thermiques, 78320 Le Mesnil Saint Denis (FR)
(72) Inventeur: TISON, Frédéric, F-72230 Guecelard (FR); MOREAU, Sylvain, F-72700 Spay (FR); ROBILLON, Lionel, F-72230 Mulsanne (FR); BELLENFANT, Aurélie, F-72210 Roeze-sur-Sarthe (FR); BUSSON, François, F-72220 Saint-Gervais-en-Belin (FR)
(74) Mandataire: Valeo Systèmes Thermiques
(86) Numéro de dépôt international: PCT/EP2015/070524
(87) Numéro de publication internationale: WO 2016/038053

(56) Documents cités:
- WO-A1-2014/024375
- WO-A1-2014/095577
- WO-A1-2014/103563
- US-A1- 2010 307 180

## Description

La présente invention concerne un tube à réservoir de matériau à changement de phases pour faisceau d'échange de chaleur d'échangeur de chaleur, notamment dans le domaine de la gestion thermique au sein d'un véhicule automobile.

Les échangeurs de chaleur comprennent généralement un faisceau de tubes parallèles formés de plaques contenant un premier fluide caloporteur, par exemple un fluide réfrigérant dans le cas d'un évaporateur de circuit de climatisation. Le faisceau est également traversé par un second fluide caloporteur, par exemple un flux d'air destiné à l'habitacle, balayant les tubes dont la surface, augmentée par l'ajout de perturbateurs ou intercalaires entre les tubes, optimise l'échange thermique.

Il est connu de pourvoir ces échangeurs de chaleur de réservoirs de matériau à changement de phases associés aux tubes du faisceau servant à la circulation du premier fluide caloporteur. De tels échangeurs par exemple dans le cas d'un évaporateur d'un circuit de climatisation, permettent de maintenir le refroidissement d'un habitacle du véhicule pendant une période de temps donnée notamment lorsque le moteur du véhicule est à l'arrêt et n'entraîne plus le compresseur de mise en circulation du fluide réfrigérant, notamment pour les véhicules munis d'un système d'arrêt automatique du moteur lors des arrêts courts du véhicule. Dans ces périodes d'arrêt du moteur, le matériau à changement de phases capte de l'énergie calorifique à l'air traversant l'évaporateur de sorte à le refroidir.

Il est ainsi connu en particulier un évaporateur pour circuit de climatisation de véhicule, comprenant un faisceau d'échange de chaleur pourvu d'un ensemble de tubes de circulation du fluide réfrigérant, un réservoir de stockage de matériau à changement de phases étant accolé aux tubes et un passage d'air étant prévu entre les tubes et les réservoirs de stockage de froid,
notamment par des protusions et récessions formées entre ces derniers. Dans de tels échangeurs le transfert thermique entre les tubes dans lesquels circule le fluide réfrigérant et les réservoirs de matériau à changement de phases est réduit d'une part, par l'existence des dites protusions et récessions s'étendant sur une surface importante de chacun des tubes et d'autres part, par l'épaisseur de matière impliquée dans le transfert thermique du tube au réservoir. En effet, celle-ci comprend la paroi du tube et la paroi du réservoir. Le document WO 2014/024375 A1 décrit un tube à réservoir de matériau à changement de phase selon le préambule de la revendication 1.

Un des buts de la présente invention est de remédier au moins partiellement aux inconvénients de l'art antérieur et de proposer un tube à réservoir de matériau à changement de phases amélioré pour une utilisation plus efficace au sein d'un faisceau d'échange de chaleur d'un échangeur de chaleur.

La présente invention concerne donc un tube à réservoir de matériau à changement de phase pour faisceau d'échange de chaleur d'un échangeur de chaleur, selon l'énoncé de la revendication 1.

Ainsi, afin de réaliser le tube à réservoir de matériau à changement de phase il n'y a que types différents de plaques utilisées, deux plaques circulation et au moins une plaque réservoir. Cela permet de limiter la production à ces deux types de plaques ce qui permet des économies dans les coûts de production. De plus, de par ce nombre réduit de types de plaques, le montage est simplifié.

Un avantage supplémentaire du tube à réservoir de matériau à changement de phase est que le matériau à changement de phase est directement au contact de la plaque de circulation, ce qui facilite et améliore les échanges d'énergie calorifique entre le premier fluide caloporteur et le matériau à changement de phase.

Selon un aspect de l'invention, le tube à réservoir de matériau à changement de phase comporte une plaque réservoir unique sur une de ses faces externes en contact avec le second fluide caloporteur.

Selon un autre aspect de l'invention, le tube comporte une plaque réservoir à réservoir de matériau à changement de phase sur chacune de ses faces externes en contact avec le second fluide caloporteur.

Selon un autre aspect de l'invention, le tube à réservoir de matériau à changement de phase comporte un orifice commun de remplissage des cavités saillantes des deux plaques réservoirs.

Selon un autre aspect de l'invention, les cavités saillantes ont une forme en dôme.

Selon un autre aspect de l'invention, les cavités saillantes ont une répartition en « V » par rapport à l'axe longitudinal de la plaque réservoir.

Selon un autre aspect de l'invention, le sommet des cavités saillantes est plat de sorte à entrer en contact avec un tube d'échange disposé en vis-à-vis au sein du faisceau d'échange de chaleur.

Selon un autre aspect de l'invention, les plaques de circulation sont identiques.

Selon un autre aspect de l'invention, au moins l'une des plaques de circulation comprend des creux de stockage de matériau à changement de phase.

Selon un autre aspect de l'invention, chaque creux est en contact avec l'autre des plaques de circulation.

Selon un autre aspect de l'invention, les creux sont répartis en quinconce.

La présente invention concerne également un faisceau d'échange de chaleur pour un échangeur de chaleur, comprenant au moins un tube à réservoir de matériau à changement de phase comme décrit précédemment.

La présente invention concerne également un échangeur de chaleur comprenant au moins un faisceau d'échange de chaleur comme décrit précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un tube à réservoir de matériau à changement de phase éclaté,
- la figure 2 montre une représentation schématique en perspective du tube à réservoir de matériau à changement de phase de la figure 1 assemblé,
- la figure 3 montre une représentation schématique en perspective d'un tube à réservoir de matériau à changement de phase selon un mode de réalisation particulier,
- la figure 4 montre une représentation schématique en coupe d'une portion de tube à réservoir de matériau à changement de phase,
- la figure 5 montre une représentation schématique en coupe d'une portion de tube à réservoir de matériau à changement de phase selon un autre mode de réalisation,
- la figure 6 montre une représentation schématique en perspective d'un tube à réservoir de matériau à changement de phase selon le mode de réalisation de la figure 5,
- la figure 7 montre une représentation schématique en perspective d'un assemblage de tubes dans un faisceau d'échange de chaleur,
- la figure 8 montre une représentation schématique d'un faisceau d'échange de chaleur.

Sur les différentes figures, les éléments identiques portent les mêmes numéros de référence.

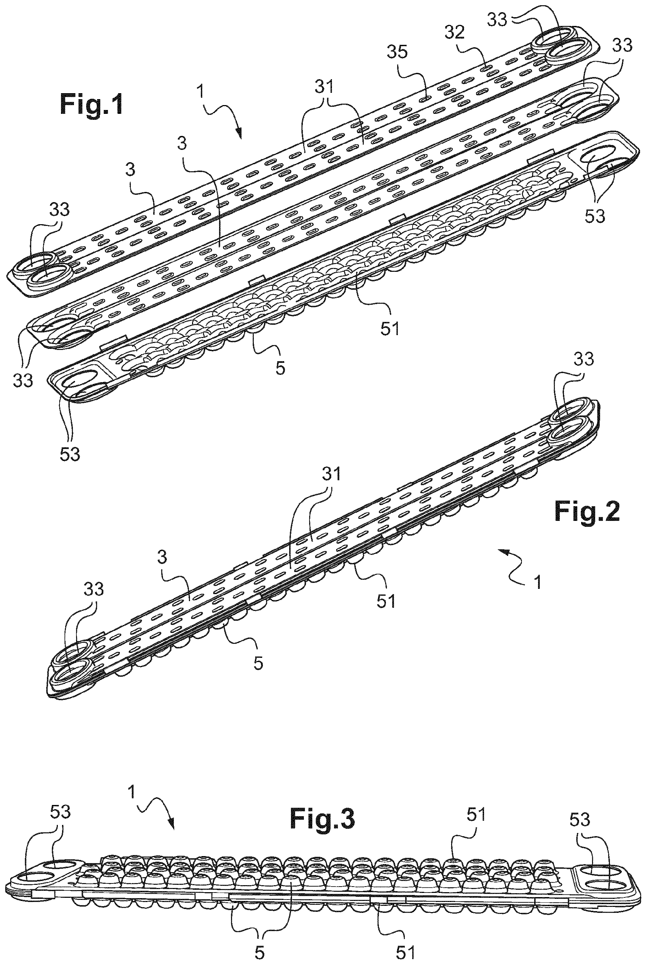

Comme le montre la figure 1, le tube à réservoir de matériau à changement de phase 1 comporte deux plaques de circulation 3 et au moins une plaque réservoir 5.

Les deux plaques de circulation 3 sont configurées pour être assemblées l'une à l'autre de façon étanche et pour former au moins un conduit 31 dans lequel circule un premier fluide caloporteur entre lesdites plaques de circulation 3. Les deux plaques de circulations 3 sont de préférence identiques et accolées l'une à l'autre en « miroir », ce qui permet de n'avoir qu'un seul type de plaque de circulation 3 à produire et donc permet d'effectuer des économies lors de la production.

L'au moins une plaque réservoir 5 comporte quant à elle des cavités 51 et est configurée pour venir s'assembler de façon étanche sur une face externe d'une des deux plaques de circulation 3 de sorte à refermer les cavités 51 et former des logements du matériau à changement de phase. Ces cavités 51 sont saillantes sur la face externe de la plaque réservoir 5 de sorte qu'un second fluide caloporteur, par exemple un flux d'air, puisse circuler entre lesdites cavités 51.

Afin de réaliser le tube à réservoir de matériau à changement de phase 1, il n'y a que deux types différents de plaques utilisées, à savoir deux plaques de circulation 3 et au moins une plaque réservoir 5. Une telle conception permet de limiter la production d'un tel tube à réservoir à ces deux types de plaques, engendrant par conséquent des économies dans les coûts de production. De plus, de par ce nombre réduit de types de plaques, le montage est simplifié.

Un avantage supplémentaire du tube à réservoir de matériau à changement de phase 1 est que le matériau à changement de phase est directement au contact de la plaque de circulation 3, ce qui facilite et améliore les échanges d'énergie calorifique entre le premier fluide caloporteur et le matériau à changement de phase.

Comme le montrent les figures 1, 4 et 5, les plaques de circulation 3 peuvent également comprendre des creux 32 réalisées de préférence par emboutissage selon une répartition homogène sur l'intégralité de la plaque de circulation 3. Les plaques de circulation 3 comprennent une face externe destinée à être orientée vers soit une plaque réservoir 5, soit un élément d'échange thermique avec le second fluide caloporteur, telle une plaque ondulée. Chaque plaque de circulation 3 comprend une face interne opposée à la face externe depuis laquelle s'étend chaque creux 32 de telle sorte que leur partie sommitale est en contact avec la plaque adjacente de circulation 3.Selon un mode de réalisation préféré, mais non limitatif, les creux 32 sont répartis en quinconce sur la plaque de circulation 3. Du fait d'une telle répartition, la face intérieure de chaque creux 32 se trouve dans la voie d'écoulement du premier fluide délimitée par le conduit 31, tandis que la face extérieure peut former une réserve locale de matériau à changement de phase, augmentant de la sorte leur échange thermique.

Du fait que la face externe de la plaque de circulation 3 est pourvue de creux 32, ces derniers forment des réserves complémentaires de matériau à changement de phase de sorte que pour un encombrement donné, un tube à réservoir 5 de matériau à changement de phase pourvu de telles creux 32 permet un stockage augmenté de matériau à changement de phase. Cela a pour effet d'augmenter le temps durant lequel le matériau à changement de phase échange de l'énergie calorifique avec le second fluide.

En outre, compte tenu du fait que les creux 32 forment des liaisons supplémentaires avec la plaque adjacente de circulation 3, la tenue mécanique du tube à réservoir de matériau à changement de phase 1 est augmentée. Par voie de conséquent un tel tube à réservoir de matériau à changement de phase 1 peut être utilisé dans un échangeur de chaleur du type d'un évaporateur qui est apte à recevoir un fluide réfrigérant dont la pression a une valeur nominale d'approximativement 15 bar.

Comme le montre la figure 2, le tube à réservoir de matériau à changement de phase 1 comporte une plaque réservoir 5 unique, sur une de ses faces externes en contact avec le second fluide caloporteur. L'autre de ses faces est en contact avec une plaque ondulée d'échange thermique avec le second fluide caloporteur, une telle plaque ondulée étant parfois qualifiée d'ailette ou d'intercalaire.

Selon une variante de réalisation, le tube 1 peut néanmoins comporter une plaque réservoir à réservoir de matériau à changement de phase 1 sur chacune de ses faces externes en contact avec le second fluide caloporteur comme cela est montré sur la figure 3. Afin de faciliter le remplissage des cavités saillantes 51 dans ce mode de réalisation, le tube à réservoir de matériau à changement de phase 1 peut comporter un orifice de remplissage (non représenté) commun des cavités saillantes 51 des deux plaques réservoirs 5.

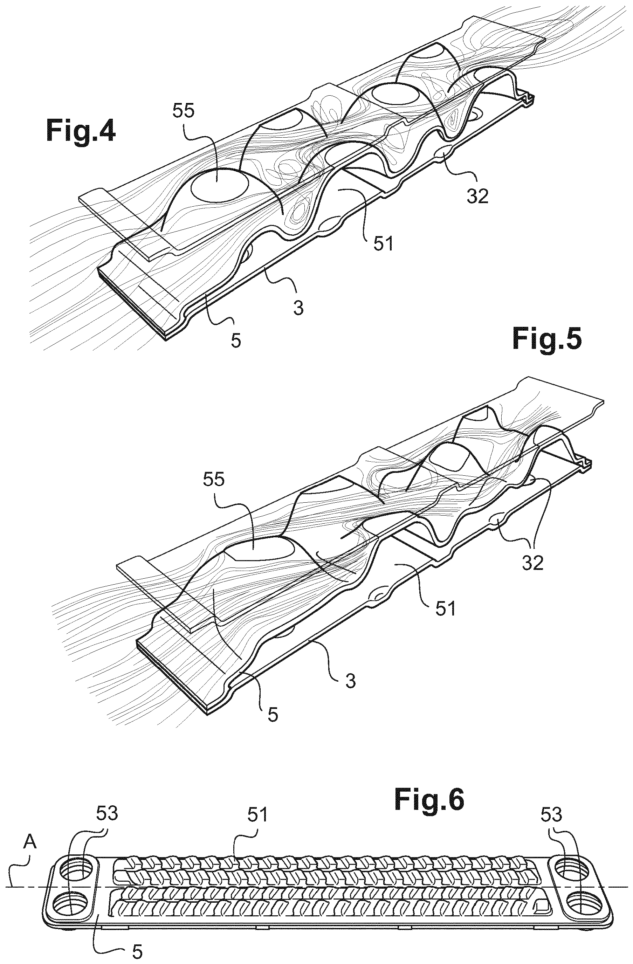

Selon un premier mode de réalisation illustré à la figure 4, les cavités saillantes 51 ont une forme en dôme. Ces dômes sont plus particulièrement disposés en quinconce afin que le second fluide caloporteur puisse circuler entre eux.

Selon un second mode de réalisation illustré à la figure 5, les cavités saillantes 51 ont une forme oblongue. Les cavités saillantes 51 sont alors réparties en « V » par rapport à l'axe longitudinal A de la plaque réservoir 5 comme le montre la figure 6. Cette forme et cette répartition particulière permettent au tube à réservoir de matériau à changement de phase 1 de contenir une quantité de matériau à changement de phase plus importante que pour la forme en dôme et permettent également de limiter les pertes de charge du second fluide caloporteur lors de son passage entre les cavités saillantes 51.

Les cavités saillantes 51, que se soit selon le premier ou le second mode de réalisation, ont un sommet 55 plat respectivement de section cylindrique et de section polygonale, par exemple approximativement trapézoïdale.

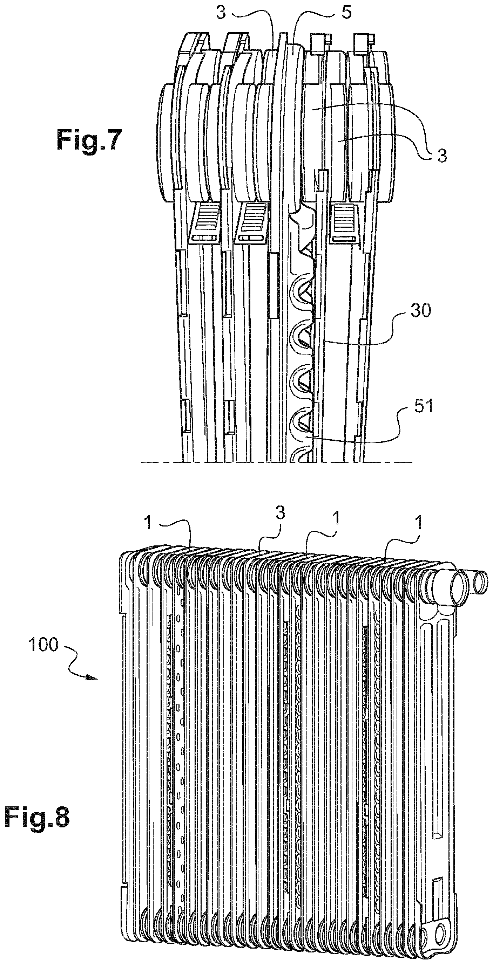

De tels sommets 55 sont destinés à entrer en contact avec un tube d'échange 30 disposé en vis-à-vis au sein du faisceau d'échange de chaleur 100, comme cela est montré sur la figure 7.

Le tube d'échange 30 peut être un tube pourvu de micro canaux, un tel tube étant issu de la superposition de plaques planes et d'une plaque ondulée, cette dernière étant parfois qualifiée d'intercalaire interne, ladite plaque ondulée étant alors disposée entre les deux plaques planes adjacentes afin de former les micro-canaux.

Selon une variante de réalisation, le tube d'échange 30 peut plus particulièrement être composé de deux plaques de circulation 3, telles qu'elles ont été décrites précédemment, assemblées l'une à l'autre de façon étanche.

La figure 8 montre un faisceau d'échange de chaleur 100 comportant des tubes à réservoir de matériau à changement de phase 1 afin de former à terme, un échangeur de chaleur. Le faisceau d'échange de chaleur 100 comporte ici, réparti sur toute sa longueur, trois tubes à réservoir de matériau à changement de phase 1. Deux de ces tubes à réservoir de matériau à changement de phase 1 comportent une plaque réservoir 5 sur chacune de leurs faces externes en contact avec le second fluide caloporteur. Le troisième tube à réservoir de matériau à changement de phase 1 ne comporte quant à lui qu'une seule plaque réservoir 5 sur une de ses faces externes en contact avec le second fluide caloporteur. Le nombre total de tubes à réservoir de matériau à changement de phase 1 et de plaques réservoir 5 présents au sein d'un faisceau d'échange de chaleur 100 est fonction de sa taille et de sa longueur. Plus le faisceau d'échange de chaleur 100 est long, plus ce nombre est important afin d'assurer un refroidissement du second fluide caloporteur continue et ce même si le premier fluide caloporteur de circule plus dans ledit faisceau, par exemple lors d'un arrêt du compresseur.

Ainsi, on voit bien que le tube à réservoir de matériau à changement de phase 1 du fait qu'il soit composé de deux plaques de circulation 3 et d'au moins une plaque réservoir 5, permet un montage simple et une fabrication peu coûteuse. De plus, le matériau à changement de phase est directement au contact de la plaque de circulation 3 ce qui facilité et améliore les échanges d'énergie calorifique entre le premier fluide caloporteur et le matériau à changement de phase.

## Revendications

1. Tube à réservoir de matériau à changement de phase (1) pour faisceau d'échange de chaleur (100) d'un échangeur de chaleur, ledit tube à réservoir de matériau à changement de phase (1) comportant :
- deux plaques de circulation (3) configurées pour être assemblées l'une à l'autre de façon étanche et former au moins un conduit (31) dans lequel circule un premier fluide caloporteur entre lesdites plaques de circulation (3) ;
**caractérisé en ce qu'**il comprend en outre au moins une plaque réservoir (5) comportant des cavités (51), ladite plaque réservoir (5) étant configurée pour venir s'assembler de façon étanche sur une face externe d'une des deux plaques de circulation (3) de sorte à refermer les cavités (51) et former des logements du matériau à changement de phase, lesdites cavités (51) étant saillantes sur la face externe de la plaque réservoir (5) de sorte qu'un second fluide caloporteur puisse circuler entre lesdites cavités (51).

2. Tube à réservoir de matériau à changement de phase (1) selon la revendication 1, **caractérisé en ce qu'**il comporte une plaque réservoir (5) unique sur une de ses faces externes en contact avec le second fluide caloporteur.

3. Tube à réservoir de matériau à changement de phase (1) selon la revendication 1, **caractérisé en ce qu'**il comporte une plaque réservoir à réservoir de matériau à changement de phase (1) sur chacune de ses faces externes en contact avec le second fluide caloporteur.

4. Tube à réservoir de matériau à changement de phase (1) selon la revendication précédente, **caractérisé en ce que** ledit tube à réservoir de matériau à changement de phase (1) comporte un orifice commun de remplissage des cavités saillantes (51) des deux plaques réservoirs (5).

5. Tube à réservoir de matériau à changement de phase (1) selon l'une des revendications précédentes, **caractérisé en ce que** les cavités saillantes (51) ont une forme en dôme.

6. Tube à réservoir de matériau à changement de phase (1) selon l'une des revendications précédentes, **caractérisé en ce que** les cavités saillantes (51) ont une répartition en « V » par rapport à l'axe longitudinal (A) de la plaque réservoir (5).

7. Tube à réservoir de matériau à changement de phase (1) selon la revendication 5, **caractérisé en ce que** la cavité saillante (51) comporte un sommet (55) plat de sorte à entrer en contact avec un tube d'échange (30) disposé en vis-à-vis au sein du faisceau d'échange de chaleur (100).

8. Tube à réservoir de matériau à changement de phase (1) selon l'une des revendications précédentes, **caractérisé en ce que** les plaques de circulation (3) sont identiques.

9. Tube à réservoir de matériau à changement de phase (1) selon la revendication précédente, **caractérisé en ce qu'**au moins l'une des plaques de circulation (3) comprend des creux (32) de stockage de matériau à changement de phase.

10. Tube à réservoir de matériau à changement de phase (1) selon la revendication précédente, **caractérisé en ce que** chaque creux (32) est en contact avec l'autre des plaques de circulation (3).

11. Tube à réservoir de matériau à changement de phase (1) selon la revendication 9 ou 10, **caractérisé en ce que** les creux (32) sont répartis en quinconce.

12. Faisceau d'échange de chaleur (100) pour un échangeur de chaleur, comprenant au moins un tube à réservoir de matériau à changement de phase (1) selon l'une des revendications précédentes.

13. Echangeur de chaleur comprenant au moins un faisceau d'échange de chaleur (100) selon la revendication précédente.

## Patentansprüche

1. Rohr mit Reservoir für ein Phasenwechselmaterial (1) für ein Wärmetauscherbündel (100) eines Wärmetauschers, wobei das Rohr mit Reservoir für ein Phasenwechselmaterial (1) Folgendes aufweist:
- zwei Zirkulationsplatten (3), die so konfiguriert sind, dass sie dicht miteinander verbunden werden können und mindestens einen Kanal (31) bilden, in dem eine erste Wärmeträgerflüssigkeit zwischen den Zirkulationsplatten (3) zirkuliert;
**dadurch gekennzeichnet, dass** es außerdem mindestens eine Reservoirplatte (5) mit Hohlräumen (51) umfasst, wobei die Reservoirplatte (5) so konfiguriert ist, dass sie dicht an einer Außenseite einer der beiden Zirkulationsplatten (3) angebracht werden kann, um die Hohlräume (51) zu schließen und Aufnahmen für das Phasenwechselmaterial zu bilden, wobei die Hohlräume (51) an der Außenseite der Reservoirplatte (5) hervorstehen, sodass eine zweite Wärmeträgerflüssigkeit zwischen den Hohlräumen (51) zirkulieren kann.

2. Rohr mit Reservoir für ein Phasenwechselmaterial (1) nach Anspruch 1, **dadurch gekennzeichnet, dass** es eine einzige Reservoirplatte (5) auf einer seiner Außenseiten aufweist, die mit der zweiten Wärmeträgerflüssigkeit in Kontakt steht.

3. Rohr mit Reservoir für ein Phasenwechselmaterial (1) nach Anspruch 1, **dadurch gekennzeichnet, dass** es eine Reservoirplatte mit Reservoir für ein Phasenwechselmaterial (1) auf jeder seiner Außenseiten aufweist, die mit der zweiten Wärmeträgerflüssigkeit in Kontakt steht.

4. Rohr mit Reservoir für ein Phasenwechselmaterial (1) nach dem vorhergehenden Anspruch, **dadurch gekennzeichnet, dass** das Rohr mit Reservoir für ein Phasenwechselmaterial (1) eine gemeinsame Öffnung zum Füllen der vorstehenden Hohlräume (51) der beiden Reservoirplatten (5) aufweist.

5. Rohr mit Reservoir für ein Phasenwechselmaterial (1) nach einem der vorhergehenden Ansprüche, **dadurch gekennzeichnet, dass** die vorstehenden Hohlräume (51) eine Kuppelform aufweisen.

6. Rohr mit Reservoir für ein Phasenwechselmaterial (1) nach einem der vorhergehenden Ansprüche, **dadurch gekennzeichnet, dass** die vorstehenden Hohlräume (51) eine "V"-förmige Verteilung in Bezug auf die Längsachse (A) der Reservoirplatte (5) aufweisen.

7. Rohr mit Reservoir für ein Phasenwechselmaterial (1) nach Anspruch 5, **dadurch gekennzeichnet, dass** der vorstehende Hohlraum (51) eine flache Oberseite (55) aufweist, um in Kontakt mit einem Austauschrohr (30) zu treten, das gegenüberliegend innerhalb des Wärmetauscherbündels (100) angeordnet ist.

8. Rohr mit Reservoir für ein Phasenwechselmaterial (1) nach einem der vorhergehenden Ansprüche, **dadurch gekennzeichnet, dass** die Zirkulationsplatten (3) identisch sind.

9. Rohr mit Reservoir für ein Phasenwechselmaterial (1) nach dem vorhergehenden Anspruch, **dadurch gekennzeichnet, dass** mindestens eine der Zirkulationsplatten (3) Vertiefungen (32) zur Speicherung von Phasenwechselmaterial aufweist.

10. Rohr mit Reservoir für ein Phasenwechselmaterial (1) nach dem vorhergehenden Anspruch, **dadurch gekennzeichnet, dass** jede Vertiefung (32) in Kontakt mit der anderen der Umlaufplatten (3) steht.

11. Rohr mit Reservoir für ein Phasenwechselmaterial (1) nach Anspruch 9 oder 10, **dadurch gekennzeichnet, dass** die Vertiefungen (32) gegeneinander versetzt verteilt sind.

12. Wärmetauscherbündel (100) für einen Wärmetauscher, das mindestens ein Rohr mit Reservoir für ein Phasenwechselmaterial (1) nach einem der vorhergehenden Ansprüche aufweist.

13. Wärmetauscher mit mindestens einem Wärmetauscherbündel (100) nach dem vorhergehenden Anspruch.

## Claims

1. Tube (1) with a reservoir of phase-change material for a heat exchange bundle (100) of a heat exchanger, said tube (1) with a reservoir of phase-change material including:
- two flow plates (3) which are configured to be assembled with one another in a fluid-tight fashion and form at least one duct (31) in which a first heat-transfer fluid flows between said flow plates (3),
**characterized in that** it also includes at least one reservoir plate (5) including cavities (51), said reservoir plate (5) being configured so that it can be assembled in fluid-tight fashion on an external face of one of the two flow plates (3) so as to close the cavities (51) and form housings for the phase-change material, said cavities (51) projecting from the external face of the reservoir plate (5) so that a second heat-transfer fluid can circulate between said cavities (51).

2. Phase-change material reservoir tube (1) according to Claim 1, **characterized in that** it includes a single reservoir plate (5) on one of its external faces in contact with the second heat-transfer fluid.

3. Phase-change material reservoir tube (1) according to Claim 1, **characterized in that** it includes a reservoir plate with a reservoir of phase-change material (1) on each of its external faces in contact with the second heat-transfer fluid.

4. Phase-change material reservoir tube (1) according to the preceding claim, **characterized in that** said tube (1) with a reservoir of phase-change material includes a common orifice for filling the projecting cavities (51) of the two reservoir plates (5).

5. Phase-change material reservoir tube (1) according to any one of the preceding claims, **characterized in that** the projecting cavities (51) are domed-shaped.

6. Phase-change material reservoir tube (1) according to any one of the preceding claims, **characterized in that** the projecting cavities (51) have a "V" distribution about the longitudinal axis (A) of the reservoir plate (5) .

7. Phase-change material reservoir tube (1) according to Claim 5, **characterized in that** the top (55) of the projecting cavity (51) is flat in order to come into contact with an exchange tube (30) facing it in the heat exchange bundle (100).

8. Phase-change material reservoir tube (1) according to any one of the preceding claims, **characterized in that** the circulation plates (3) are identical.

9. Phase-change material reservoir tube (1) according to the preceding claim, **characterized in that** at least one of the circulation plates (3) includes hollows (32) for storing phase-change material.

10. Phase-change material reservoir tube (1) according to the preceding claim, **characterized in that** each hollow (32) is in contact with the other circulation plate (3).

11. Phase-change material reservoir tube (1) according to Claim 9 or 10, **characterized in that** the hollows (32) are arranged in a quincunx.

12. Heat exchange bundle (100) for a heat exchanger, including at least one tube (1) with a reservoir of phase-change material according to any one of the preceding claims.

13. Heat exchanger including at least one heat exchange bundle (100) according to the preceding claim.
